# EUROPEAN PATENT SPECIFICATION

(11) **EP 2 568 702 B1**
(45) Date of publication and mention of the grant of the patent: **21.05.2014**
(21) Application number: 11791896.1
(22) Date of filing: 28.05.2011
(51) Int. Cl.: H04N 7/15, H04S 5/00, H04S 3/00, H04M 3/56, H04S 7/00, H04R 3/00

(54) **METHOD AND DEVICE FOR AUDIO SIGNAL MIXING PROCESSING**
VERFAHREN UND VORRICHTUNG ZUR VERARBEITUNG EINER AUDIOSIGNALMISCHUNG
PROCÉDÉ ET DISPOSITIF POUR UN TRAITEMENT DE MÉLANGE DE SIGNAUX AUDIO

(30) Priority: 07.06.2010 CN 201010199195
(43) Date of publication of application: 13.03.2013
(73) Proprietor: Huawei Device Co., Ltd., Longgang District Shenzhen Guangdong 518129 (CN)
(72) Inventor: LIANG, Liyan, Shenzhen Guangdong 518129 (CN)
(74) Representative: Thun, Clemens
(86) International application number: PCT/CN2011/074820
(87) International publication number: WO 2011/153905

(56) References cited:
- EP-A2- 1 763 241
- CN-A- 1 929 593
- CN-A- 101 510 988
- JP-A- 9 271 006
- JP-A- 2006 180 251
- JP-A- 2006 180 251
- US-A1- 2008 298 610
- US-A1- 2009 015 661

## Description

This application claims priority to Chinese Patent Application No. 201010199195.9, filed with the Chinese Patent Office on June 7, 2010, and entitled "AUDIO MIXING METHOD AND APPARATUS FOR AUDIO SIGNALS".

### FIELD OF THE INVENTION

The present invention relates to the field of communications, and in particular to an audio mixing processing method and apparatus for audio signals.

### BACKGROUND OF THE INVENTION

In a multimedia communication system, a multimedia server (MCU (Multipoint Control Unit, multipoint control unit) in a video conference is taken as an example) performs audio mixing processing for audio signals sent by all participants in the multimedia communication. The following takes a video conference as an example to describe a procedure for audio mixing processing for N parties. The procedure specifically includes the following: After receiving voice code streams collected by multimedia terminals at all sites, an MCU decodes the voice code streams to obtain the audio signals of all sites, calculates voice envelopes of all sites after decoding, obtains an N-party site (hereinafter referred to as largest N-party site) with the largest voice envelope in the conference by comparing the voice envelopes of all sites, and performs audio mixing for the audio signals of the determined N-party site; sends the audio mixed signals of the largest N-party site to other sites except the determined N-party site, and sends the audio mixed signals of N-1-party sites except the local site to all sites in the largest N-party site.

In the prior art, to enhance user experience, a multimedia terminal will add location information to the audio information collected by itself, or the multimedia server will allocate location information for the audio information sent by each multimedia terminal that participates in audio mixing.

The prior art has the following disadvantages:
In the existing audio mixing processing solution, for a receiving terminal, location overlapping often occurs in the received audio signals after audio mixing. Therefore, a user cannot clearly hear voice signals from multiple sites at a same location, thereby reducing the field experience and feeling of the user.

US 2008/298610 A1 (VIROLAINEN JUSSI [FI] ET AL, 4 December 2008) provides methods, computer-readable media, and apparatuses for re-panning multiple audio signals by applying spatial cue coding. Sound sources in each of the signals may be re-panned before the signals are mixed to a combined signal. Processing may be applied in a conference bridge that receives two omni-directionally recorded audio signals. The conference bridge subsequently re-pans one of the signals to the listeners left side and the signal to the right side. The source image mapping and panning may further be adaptively based on the content and use case. Mapping may be done by manipulating the directional parameters prior to directional decoding or before directional mixing. Directional information that is associated with an audio input signal is remapped order to compress input source positions into virtual source positions. The virtual sources may be placed with respect to actual loudspeakers using binaural cue panning.

EP 1 763 241 A2 (POLYCOM INC [US], 14 March 2007) discloses a method that provides audio location perception to an endpoint in a multipoint videoconference by providing a plurality of audio streams to the endpoint, wherein each of the audio streams corresponds to one of the loudspeakers at the endpoint. The audio streams are differentiated so as to emphasize broadcasting of the audio streams through one or more loudspeakers closest to a position of a speaking endpoint in a videoconference layout that is displayed at the endpoint. For example, the audio broadcast at a loudspeaker that is at a far-side of the screen might be attenuated or time delayed compared to audio broadcast at a loudspeaker that is located at a near-side of the display. The disclosure also provides a multipoint control unit (MCU) that processes audio signals from two or more endpoints according to the positions in a layout of the endpoints and then transmits processed audio streams to the endpoints in a way that allows endpoints to broadcast spatially correlated audio.

JP 2006 180251 A (YAMAHA CORP, 6 July 2006) provides a means for enabling multiple callers to perform utterance and to discriminate the voice of the different callers concerning a system for synthesizing the voice of the plurality of callers and issuing it. In the solution: A voice signal processing server receives the voice signal of a participant from each terminal apparatus. A cumulative time data generator generates cumulative time data which indicates the accumulation of an utterance time indicated by each voice signal. A terminal apparatus selector selects a prescribed number of terminal apparatuses of the participants with the long utterance time, based on the cumulative time data. A voice and image position allocating part allocates the respectively different voice and image positions to the selected terminal apparatuses. A voice signal working part applies processing so as to allow the voice, and image position of each voice signal to coincide with the allocated voice and image position. The voice signal with the voice and image position adjusted therein is mixed and transmitted to the terminal apparatus.

### SUMMARY OF THE INVENTION

Embodiments of the present invention provide an audio mixing processing method and apparatus for audio signals, thereby improving field experience and feeling of audience.

The objective of the present invention is achieved by using the following technical solutions.

An audio mixing processing method for audio signals includes:
determining a terminal that needs to adjust a location of an audio signal, and adjusting location information about the audio signal for the terminal; wherein when multiple terminals whose locations are to be adjusted exist, the determining a terminal that needs to adjust a location of an audio signal comprises: adjusting the location information about audio signals of the multiple terminals whose locations are to be adjusted in turn according to a preset priority; wherein the preset priority comprises: when single-track, dual-track, and multitrack terminals are involved in audio mixing, the single-track terminal that participates in audio mixing has a primary adjustment priority; the terminal that participates in audio mixing for the first time has a secondary adjustment priority; and when single-track, dual-track, and multitrack terminals are involved in audio mixing, the dual-track terminal and multitrack terminal that participate in audio mixing has tertiary adjustment priority; and
performing audio mixing processing for the audio signal whose location is adjusted and other signals to be audio mixed.

An audio mixing processing apparatus for audio signals includes:
a location adjusting module, configured to determine a terminal that needs to adjust a location of an audio signal, and adjust location information about the audio signal for the terminal; wherein when multiple terminals whose locations are to be adjusted exist, the location adjusting module is specifically configured to adjust the location information about audio signals of the multiple terminals whose locations are to be adjusted in turn according to a preset priority; wherein the preset priority comprises: when single-track, dual-track, and multitrack terminals are involved in audio mixing, the single-track terminal that participates in audio mixing has a primary adjustment priority; the terminal that participates in audio mixing for the first time has a secondary adjustment priority; and when single-track, dual-track, and multitrack terminals are involved in audio mixing, . the dual-track terminal and multitrack terminal that participate in audio mixing has tertiary adjustment priority; and
an audio mixing processing module, configured to perform audio mixing processing for the audio signal whose location is adjusted and other signals to be audio mixed.

From the technical solutions provided in the embodiments of the present invention, it may be seen that, by adjusting the location information about sending terminals that participate in audio mixing, the location of each sending terminal may be separated from each other as far as possible so that the sound of each sending terminal is more clear, thereby improving the field experience and feeling of a user.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a schematic diagram of an audio mixing processing procedure according to an embodiment of the present invention
FIG. 2 is a schematic diagram of multi-picture display according to an embodiment of the present invention;
FIG. 3 is a schematic diagram of telepresence picture display according to an embodiment of the present invention;
FIG. 4 is a schematic diagram of a location according to an embodiment of the present invention;
FIG. 5 is a schematic diagram of an audio mixing processing procedure according to Embodiment 1 of the present invention;
FIG. 6 is a schematic diagram of an audio mixing processing procedure according to Embodiment 2 of the present invention;
FIG. 7 is a schematic diagram of an audio mixing processing procedure according to Embodiment 3 of the present invention; and
FIG. 8 is a schematic structural diagram of an apparatus according to an embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

In an audio mixing system, if the location overlapping exists among more than two terminals that participate in audio mixing, the audience will hear location overlapping sound, resulting in lowered experience of the audience on site.

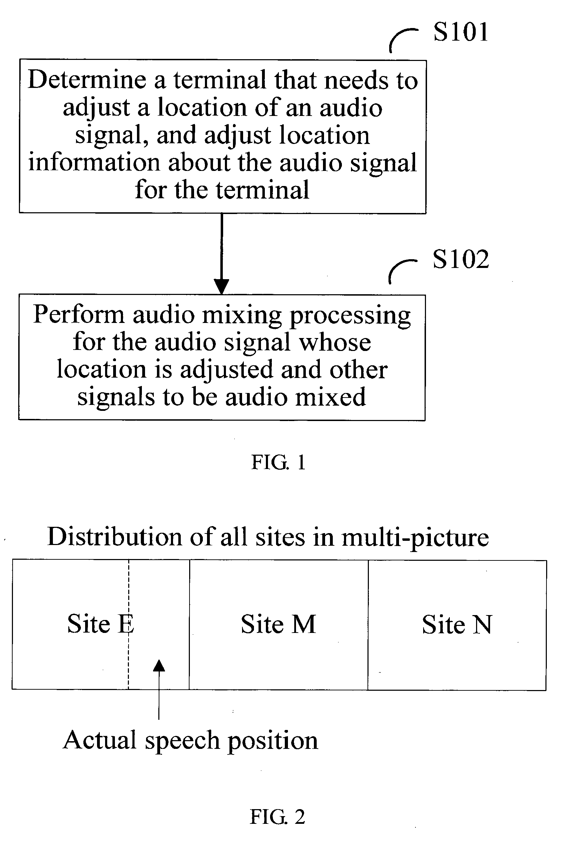

An embodiment of the present invention provides an audio mixing processing method for audio signals. When locations of audio signals of terminals that participate in audio mixing overlap, this solution may adjust the location information about audio signals of sending terminals that participate in audio mixing, so that the audience may clearly hear the location information about audio signals sent from the site, improving the field experience and feeling of the audience. The processing procedure for this method may be applied to a multi-channel media communications system that includes audio mixing. Its implementation is shown in FIG. 1, including:
S101: Determine a terminal that needs to adjust a location of an audio signal, and adjust location information about the audio signal for the terminal.
S102: Perform audio mixing processing for the audio signal whose location is adjusted and other signals to be audio mixed.

According to the technical solution provided in this embodiment, the audio location information about terminals whose audio signal locations overlap are adjusted, so that the location of each sending terminal is separated from each other as far as possible, and the sound of each sending terminal is more clear, thereby improving the field experience and feeling of a user.

In this embodiment, a case where locations of audio signals of terminals that participate in audio mixing need to be adjusted is not restricted to a case where location overlapping occurs in audio signals of terminals. In a video communication system, when a certain terminal enters an audio mixing system, or when the sorting sequence of video pictures changes, location adjustment is also needed if the location of the terminal that participates in audio mixing is inconsistent with the location of the terminal in the video picture.

Accordingly, the specific implementation of S101 includes: when the location of audio signal of the terminal that participates in audio mixing is inconsistent with the location of the terminal in the video picture, determining that the terminal is a terminal that needs location adjustment, and adjusting the location information about the terminal so that its location is consistent with the location in the video picture according to the location of the terminal in the video picture; or, if the terminal is a dual-track or multitrack terminal, adjusting the location information about the terminal according to the location of the terminal in the video picture and the actual location of the terminal.

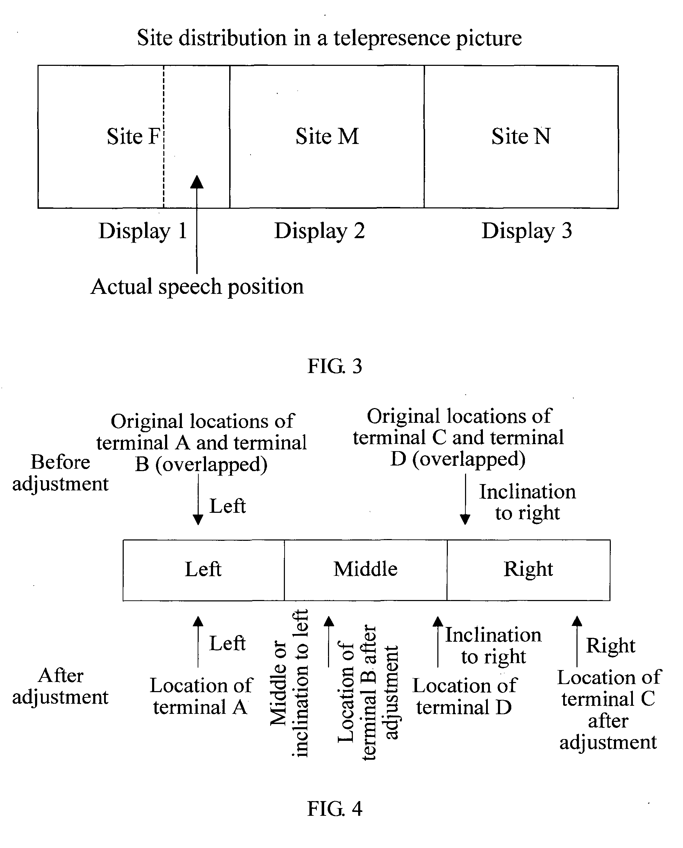

As an example but not a restriction, as shown in FIG. 2, where the actual location of the audio signal from site E is right, but the position of site E in multi-picture display is left, the location of the audio signal from site E is adjusted to left with inclination to right; or, as shown in FIG. 3, where the actual location of the audio signal from site F is right, but the corresponding display area (display 1) of site F is on the left of the telepresence picture, the location of site F is adjusted to left with inclination to right.

In a conference system, the multimedia server in this embodiment may further adjust a location of a terminal whose location is to be adjusted according to location information specified by a participating terminal. In this case, the specific implementation of S101 includes: determining that the specified terminal in the location specification information is the terminal whose location is to be adjusted, and adjusting the location of the terminal whose location is to be adjusted according to the location specification information sent by the participating terminal. The location specification information is the location specified by the participating terminal for the terminal whose location is to be adjusted. A multimedia server sets location information for the terminal whose location is to be adjusted according to the location specification information.

Optionally, the location specification information may further carry specification validation information. The specification validation information is used to indicate that: location information is adjusted for the terminal whose location is to be adjusted only during audio mixing processing for audio sent to the participating terminal; or location information is adjusted for the terminal whose location is to be adjusted during audio mixing processing for audio sent to several or all participating terminals.

Optionally, if multiple participating terminals specify different locations for a same terminal that participates in audio mixing, the multimedia server may adjust the location of the terminal in turn according to a time sequence for receiving the different location specification information, or adjust the location of the terminal whose location is to be adjusted according to a manner for applying for a token, or may also control a permission of the terminal for adjusting the location of the sending terminal according to other set rules.

When the location of the terminal whose location is to be adjusted is adjusted according to the location information specified by a participating terminal, the specific implementation of location adjustment is as follows: adjusting the location of the terminal whose location is to be adjusted at a same side of an original location of the terminal according to the received indication of the location specification information. Taking the schematic diagram of the location as shown in FIG. 4 as an example, adjustment at the same side indicates the following: if the original location of a dual-track sending terminal B that participates in audio mixing is on the left, its location is adjusted to inclination to the left or middle; and if the original location of a single-track sending terminal C that participates in audio mixing is inclination to the right, its location is adjusted to the right.

In this embodiment, when multiple terminals whose locations are to be adjusted exist, during adjustment of the location information about audio signals of these terminals whose locations are to be adjusted, adjustment may be performed in turn according to a preset priority. An embodiment of the present invention provides a preferable priority. This priority includes: when single-track, dual-track, and multitrack terminals are involved in audio mixing, the single-track terminal that participates in audio mixing has a primary adjustment priority; the terminal that participates in audio mixing for the first time has a secondary adjustment priority; and when single-track, dual-track, and multitrack terminals are involved in audio mixing, the dual-track terminal and multitrack terminal that participate in audio mixing have tertiary adjustment priority. As an example, a multi-channel terminal A, a dual-track terminal B, and a single-track terminal C that participate in audio mixing all are terminals whose locations are to be adjusted. The dual-track terminal B participates in audio mixing for the first time. In this case, the location of the audio signal of the single-track terminal C is adjusted first. Then the location of the audio signal of the dual-track terminal B is adjusted. Finally the location of the audio signal of the multitrack terminal A is adjusted.

The subject of adjusting the location information about the audio signals of the terminals is the multimedia server, or other devices that provide a function of adjusting location information. In the field of video conference, the multimedia server is an MCU (Multipoint Control Unit, multipoint control unit), or may also be a terminal that has an MCU functional module, that is, Mini MCU, which is mainly determined based on the differences among networking architectures of video conference systems.

The specific implementation of the embodiment of the present invention in practical applications is described in detail below.

Taking a video communication system being as an example, the MCU completes audio mixing for audio signals from multi-channel video multimedia terminals. After receiving voice code streams of all sites in a video conference, the MCU decodes the voice code streams of all sites, calculates a voice envelope of each site after decoding, and compares the voice envelopes of all sites to obtain an N-party site (that is, largest N-party site) with the largest voice envelope. It performs audio mixing processing for the audio signals of the largest N-party site before sending them.

During audio mixing processing, the MCU will judge an audio track type of the largest N-party site that participates in audio mixing and an audio track type of a site at a receiving end, respectively perform corresponding pre audio mixing processing (including up-mixing single-track data as dual-track data or multitrack data that has a specified location, or down-mixing dual-track data or multitrack data as single-track data, where the up-mixing processing and down-mixing processing are existing audio processing technologies and are not described herein) according to the audio track type (single-track site, dual-track site, or multitrack site) of the largest N-party site that participates in audio mixing, and send audio signals to the site at the receiving end of different sound track types. The largest N-party site (sending terminal) that participates in audio mixing will receive audio-mixed signals of other N-1-party sites except itself at the same time.

### Embodiment 1

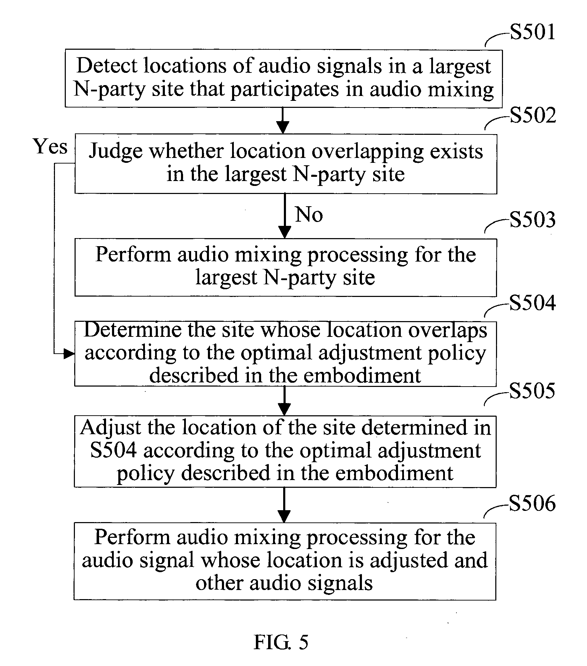

Embodiment 1 shows an audio mixing processing procedure where locations of audio signals overlap in a site of the largest N-party site that participates in audio mixing. Its audio mixing processing procedure is shown in FIG. 5. The specific implementation includes the following operations:
S501: The MCU detects an audio signal location (hereinafter referred to as location for short) of the largest N-party site to be audio mixed.

As a single-track site does not have a location, the location of the site is specified externally (which may specifically be specified by using a method such as MCU specification and user specification). For a dual-track site or multitrack site, in addition to a location externally specified, the location may further be the actual location obtained upon detection according to the data of the site itself.

A preferred manner is as follows:
Method for detecting locations of dual-track and multitrack sites: Generally, the perception of human ears for the location of a sound source is based on a signal difference between ears, such as time difference or energy difference. That is, if the time difference or energy difference of a sound source at a certain location is the same between ears, a person will feel that the sound source is located in the middle of the ears. If the energy to the left ear is higher than the energy to the right ear, or the time to the left ear is earlier than the time to the right ear, the person will feel that the sound source is inclined to the left. According to this theory, generally the actual location is obtained by detecting the time difference or/and energy difference of dual-track or multitrack data. That is, the location is inclined to the side where the time or energy is inclined.

Taking dual-track data being as an example, assume that five locations are provided: left, inclination to left, middle, inclination to right, and right. Assume that the energy difference between two audio tracks at the middle location is within 3 dB, the energy difference between two audio tracks at the location of inclination to left or inclination to right is 3 dB to 6 dB, and the energy difference between two audio tracks at the location of left or right is larger than 6 dB. The energy of data in the two audio tracks is calculated respectively, and the energy of the two audio tracks is compared. If the energy of the left audio track is 4 dB higher than the energy of the right audio track, it may be judged that the actual location is inclination to left.
S502: The MCU judges whether locations of the largest N-party site overlap; if yes, S504 is performed; if no, S503 is performed.
S503: The MCU performs audio mixing processing for the audio signals of the largest N-party site. The specific implementation of audio mixing processing may be implemented through the existing audio mixing method, and is not described herein.
S504: The MCU determines a site that needs location adjustment according to a preset method for determining a terminal whose location is to be adjusted (as in a video conference, one participating site has one multimedia terminal, for simple expression, a site described subsequently corresponds to a terminal of the site).

The following provides a preferred method for determining a terminal whose location is to be adjusted. The preferred method for determining a target terminal is as follows:
select a sending terminal with highest priority from sending terminals whose locations overlap according to a preset priority; and if only one selected terminal is involved, the terminal is the terminal whose location is to be adjusted; if two ore more selected terminals are involved, randomly select one or determine one as the terminal whose location is to be adjusted according to a sequence of entering an audio mixer.

Optionally, the preset priority is as follows:
when single-track, dual-track, and multitrack terminals are involved in audio mixing, the single-track sending terminal that participates in audio mixing has a primary adjustment priority;
the sending terminal that participates in audio mixing for the first time has a secondary adjustment priority (as audio signals that enter the audio mixer for audio mixing are determined by comparing an energy size, and the energy of the audio signal from each terminal changes, the maximum N terminals that participate in audio mixing are dynamically adjusted); and
when single-track, dual-track, and multitrack terminals are involved in audio mixing, the dual-track sending terminal and multitrack sending terminal that participate in audio mixing has tertiary adjustment priority.

Taking the schematic diagram of the location as shown in FIG. 4 as an example, as the multitrack terminal A and dual-track terminal B that participate in audio mixing encounter location overlapping, and the dual-track terminal B participates in audio mixing for the first time, the dual-track terminal B is the terminal whose location is to be adjusted; as the single-track terminal C and multitrack terminal D that participate in audio mixing encounter location overlapping, the single-track terminal C is selected as the terminal whose location is to be adjusted. According to the preferred method for determining the terminal whose location is to be adjusted, if a single-track site 1 and a dual-track site 2 in the largest N-party site encounter location overlapping in audio signals, it is determined that the single-track site 1 needs to adjust the location.
S505: The MCU adjusts the location of the site determined in S504 according to a preset location adjustment principle, so that the locations in the largest N-party site no longer overlap, and then executes S506.

The following provides a preferred location adjustment principle. The preferred location adjustment principle is based on the principle of separation and nearby. If the terminal whose location is to be adjusted is a single-track terminal, the terminal is adjusted to locations at both sides preferably (locations at both sides are relative to the "middle" location); if the terminal whose location is to be adjusted is a dual-track sending terminal or a multitrack sending terminal, the target sending terminal is preferably adjusted to the middle location. By separation and nearby, it means to adjust the terminal whose location is to be adjusted to the location at the same side of the original location of the terminal. Still taking the schematic diagram of the location as shown in FIG. 4 as an example, as the original location of a dual-track sending terminal B that participates in audio mixing is on the left, its location is adjusted to inclination to the left or middle; and as the original location of a single-track sending terminal C that participates in audio mixing is inclination to the right, its location is adjusted to inclination to the right.

By using the separation and nearby principle, when location information about an audio signal is adjusted to solve location overlapping, proximity to the initial location may be ensured, avoiding impact upon the hearing feeling of a user for the original audio signal due to overlarge adjustment.
S506: The MCU performs audio mixing processing for the audio signal after location adjustment and other audio signals. Preferably, the specific implementation for receiving terminals of different types of audio tracks includes:
   (1) For a single-track site receiving terminal, after location adjustment, by comparing energy of audio signals at the largest N-party site that participates in audio mixing on each sub band in the audio mixed signal to obtain the location information about the site with the largest audio signal energy that participates in audio mixing on each sub band in the audio mixed signal (if the site with the largest audio signal energy is a site after location adjustment, the location information indicates the location information after adjustment), and send the location information about the largest N-party site with the largest audio signal energy on each sub band in the audio mixed signal and the audio mixed signal after audio mixing processing to the single-track site receiving terminal.
   (2) For a dual-track site receiving terminal, if the largest N-party site has a single-track site or a multitrack site, generate a dual-track audio signal from the audio signal of the largest N-party site according to the location information after adjustment, and then perform audio mixing processing; if the largest N-party site has a dual-track site, adjust the audio signal of the sending terminal according to the location after adjustment, put it in audio mixing processing, and then send the audio mixed signal to the dual-track site receiving terminal.

The implementation for generating a dual-track audio signal from the audio signal of the single-track site in the largest N-party site may include but is not limited to: allocating energy for a single-track audio signal of the single-track site according to location information about the single-track site after adjustment to obtain a dual-track audio signal that has space location information. For example, if the location of the single-track site after adjustment is "right", greater energy relative to energy allocated for the left-track audio signal may be allocated to the right-track audio signal during the procedure for generating dual-track audio data from the single-track audio signal.

The implementation for generating a dual-track audio signal from the audio signal of the multitrack site in the largest N-party site may include but is not limited to:
Method 1: Generating a single-track audio signal from the audio signal of the multitrack site, and then generating a dual-track audio signal from the single-track audio signal according to location information about the multitrack site after adjustment.
Method 2: Generating the dual-track audio signal through energy allocation according to the location information about the multitrack site after adjustment.

Implementation for putting the audio signal of the dual-track site in audio mixing processing after adjusting it according to the location after adjustment may include but is not limited to:
Method 1: Generating a single-track audio signal from the audio signal of the dual-track site, generating a dual-track audio signal from the single-track audio signal according to location information about the dual-track site after adjustment, and putting the dual-track audio signal obtained after processing in audio mixing processing.
Method 2: Obtaining a dual-track audio signal through energy re-allocation according to the location information about the dual-track site after adjustment, and putting the dual-track audio signal obtained after processing in audio mixing processing.
   (3) For a multitrack site receiving terminal, if the largest N-party site has a single-track site or a dual-track site, generate a multitrack audio signal from the audio signal of the single-track site or dual-track site according to the location information after adjustment, and then perform audio mixing processing; if the largest N-party site has a multitrack site, adjust the audio signal of the multitrack site according to the location after adjustment, put it in audio mixing processing, and then send the audio mixed signal to the multitrack site sending terminal.

For the implementation for generating a dual-track audio signal from the audio signal of the single-track site, reference may be made to the implementation for the dual-track site receiving terminal. It is not described herein.

The implementation for generating a multitrack audio signal from the audio signal of the dual-track site may include but is not limited to:
Method 1: Generating a single-track audio signal from the audio signal of the dual-track site, and then generating a multitrack audio signal from the single-track audio signal according to location information about the dual-track site after adjustment.
Method 2: Generating the multitrack audio signal through energy allocation according to the location information about the dual-track site after adjustment.

Implementation for putting the audio signal of the multitrack site in audio mixing processing after adjusting it according to the location after adjustment may include but is not limited to:
Method 1: Generating a single-track audio signal from the audio signal of the multitrack site, generating a multitrack audio signal from the single-track audio signal according to location information about the multitrack site after adjustment, and putting the multitrack audio signal obtained after processing in audio mixing processing.
Method 2: Obtaining a multitrack audio signal through energy re-allocation according to the location information about the multitrack site after adjustment, and putting the multitrack audio signal obtained after processing in audio mixing processing.

The procedure for audio mixing processing ensures that the audio signal locations among all sites in the largest N-party site do not overlap, thereby improving the speech clarity and improving the field experience and feeling of the audience.

### Embodiment 2

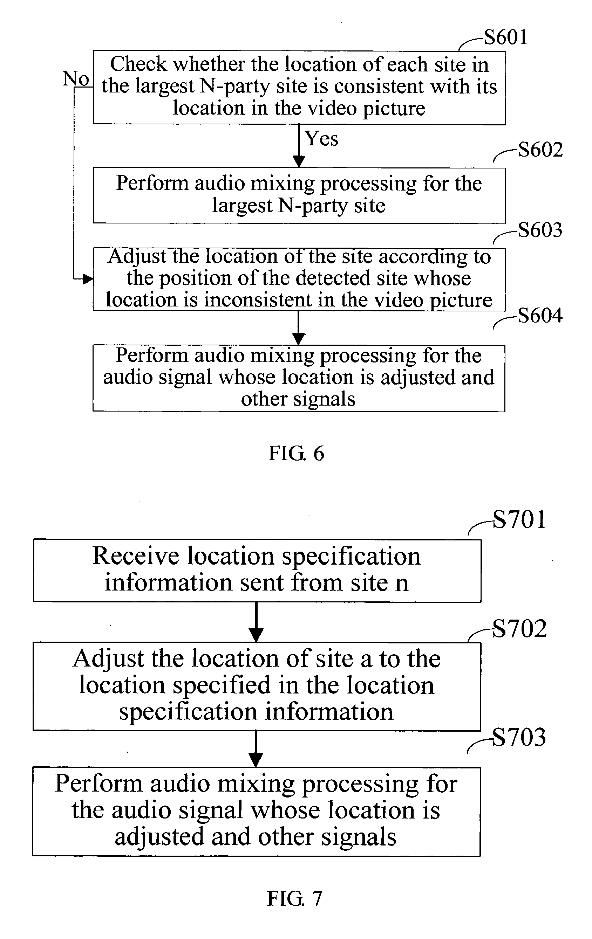

Embodiment 2 shows an audio mixing processing procedure where the location of a site in the largest N-party site that participates in audio mixing is inconsistent with its location in the video picture. Its audio mixing processing procedure is shown in FIG. 6. The specific implementation includes the following operations:
S601: The MCU checks whether the location of each site in the largest N-party site is consistent with its location in the video picture; if yes, S602 is performed; if no, S603 is performed.
S602: The MCU performs audio mixing processing for the audio signals from the largest N-party site. The specific implementation of audio mixing processing may be implemented through the existing audio mixing method, and is not described herein.
S603: According to a detected position of a site whose locations are inconsistent in the video picture, the MCU adjusts the location of the site. The specific adjustment method includes but is not limited to:
   1) Adjusting the location of the site to its location displayed in the video picture; for example, if the actual location of site 1 is right, but the location of site 1 displayed in the multi-picture is middle, adjusting the location of site 1 to middle; or
   2) Adjusting the location by combining the actual location of the site and its location in the video picture; for example, if the actual location of site 1 is right, but the location of site 1 displayed in the multi-picture is left, adjusting the location of site 1 to left with inclination to right;

Adjustment to the locations of different types of terminals is similar to the method in Embodiment 1, and is not described herein.
S604: Perform audio mixing processing for location information after adjustment. For the specific audio mixing processing method, reference may be made to audio mixing implementation for receiving terminals of different types of audio tracks in Embodiment 1.

In Embodiment 2, by adjusting the location of the site whose location is inconsistent with its location in the video picture, the location information about the largest N-party site heard by a user of the video communication system is consistent with the distribution of the largest N-party site in the video picture, thereby improving the field experience and feeling of the audience.

### Embodiment 3

Embodiment 3 shows an audio mixing processing procedure when a site at the receiving end specifies a location for the largest N-party site. Its audio mixing processing procedure is shown in FIG. 7. The specific implementation includes the following operations:
S701: The MCU receives location specification information sent from site n, where the location specification information is used to instruct the MCU to adjust a location of site a in a largest N-party site. As an example but not a restriction, the location specification information may be sent through signaling.
S702: The MCU adjusts the location of site a to the location specified in the location specification information. The location specification information may carry specified validation information. The specified validation information is used to indicate that location information about site a is adjusted only during audio mixing processing sent to site n; or that location information about site a is adjusted during audio mixing processing sent to several or all sites. As an example but not a restriction, the validation information may include one or several site identifiers. When the validation information includes one site identifier "n", the MCU adjusts the location for site a according to the location specified in the location specification information only during audio mixing processing sent to site n; when the validation information includes several site identifiers (for example, "n", "b", and "c"), the MCU adjusts the location for site a according to the location specified in the location specification information during audio mixing processing sent to the several sites (site n, site b, and site c). If multiple sites specify locations for site a, the MCU adjusts the location of site a in turn according to a time sequence for receiving the different location specification information, or adjusts the location of site a according to a manner for applying for a token, or may also control a permission of each site for adjusting the location of site a according to other set rules.
S703: The MCU performs audio mixing processing for location information after adjustment. For the specific audio mixing processing method, reference may be made to audio mixing implementation for receiving terminals of different types of audio tracks in Embodiment 1.

In Embodiment 3 of the present invention, if site n specifies a location for site a, and the location of site a is inconsistent with the position of site a in the video picture, as an example but not a restriction, the location of site a may be adjusted preferably according to the specified location information about site n.

In Embodiment 3, the MCU adjusts the location of the specified largest N-party site according to location specification information sent by a site, which may allow a user to adjust the location of a specified site according to actual needs, improving the field experience satisfaction of the audience.

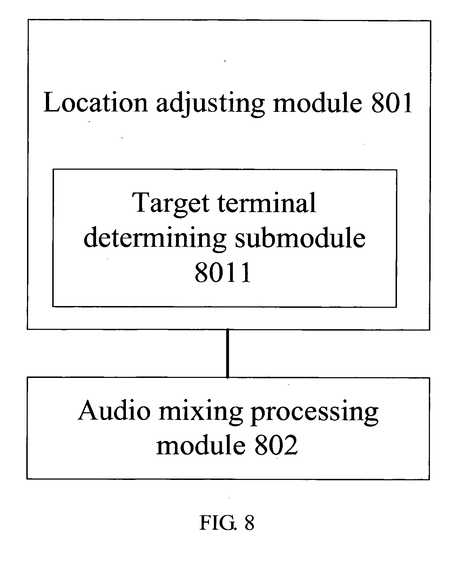

For the embodiment for the method according to the present invention, the present invention further provides an audio mixing processing apparatus for audio signals. When locations of audio signals of terminals that participate in audio mixing overlap, this apparatus may adjust the location information about audio signals of sending terminals that participate in audio mixing, so that the audience may clearly hear the location information about audio signals sent from the site, improving the field experience and feeling of the audience. Its structure is shown in FIG. 8. The specific implementation structure includes:
a location adjusting module 801, configured to determine a terminal that needs to adjust a location of an audio signal, and adjust location information about the audio signal for the terminal; and
an audio mixing processing module 802, configured to perform audio mixing processing for the audio signal whose location is adjusted and other signals to be audio mixed.

According to the apparatus provided in this embodiment, the audio location information about terminals whose audio signal locations overlap are adjusted, so that the location of each sending terminal is separated from each other as far as possible, and the sound location of each sending terminal is more clear, thereby improving the field experience and feeling of a user.

In this embodiment, a case where locations of audio signals of terminals that participate in audio mixing need to be adjusted is not restricted to a case where location overlapping occurs in audio signals of terminals. In a video communication system, when a certain terminal enters an audio mixing system, or when the sorting sequence of video pictures changes, location adjustment is also needed if the location of the terminal that participates in audio mixing is inconsistent with the location of the terminal in the video picture.

Accordingly, the location adjusting module 801 further includes a target terminal determining submodule 8011, configured to determine a terminal whose location of audio signal needs to be adjusted in the following cases: when the locations of the audio signals of the terminal and other terminals overlap; when the location of the audio signal of the terminal does not match the position of the terminal in a video picture of multiple pictures; or, when the terminal participates in audio mixing for the first time.

When the location of the terminal needs to be adjusted as the location of the audio signal of the terminal does not match the position of the terminal in a video picture of multiple pictures, the location adjusting module 801 is specifically configured to adjust the location of the terminal to its location displayed in the video picture; or, if the terminal is a dual-track or multitrack terminal, adjust the location by combining the actual location of the terminal and its location in the video picture.

As an example but not a restriction, as shown in FIG. 2, where the actual location of the audio signal from site E is right, but the position of site E in multi-picture display is left, the location of the audio signal from site E is adjusted to left with inclination to right; or, as shown in FIG. 3, where the actual location of the audio signal from site F is right, but the corresponding display area (display 1) of site F is on the left of the telepresence picture, the location of site F is adjusted to left with inclination to right.

In a conference system, the apparatus in this embodiment may further adjust a location of a terminal whose location is to be adjusted according to location information specified by a participating terminal. In this case, the location adjusting module 801 is specifically configured to adjust the location of the terminal whose location is to be adjusted according to location specification information sent by the participating terminal, where the location specification information is the location specified by the participating terminal for the terminal whose location is to be adjusted. Optionally, the location specification information may further carry specification validation information. The specification validation information is used to indicate that: location information is adjusted for the terminal whose location is to be adjusted only during audio mixing processing for audio sent to the participating terminal; or location information is adjusted for the terminal whose location is to be adjusted during audio mixing processing for audio sent to several or all participating terminals.

Optionally, if multiple participating terminals specify different locations for a same terminal that participates in audio mixing, the location adjusting module 801 may adjust the location of the terminal in turn according to a time sequence for receiving the different location specification information, or adjust the location of the terminal whose location is to be adjusted according to a manner for applying for a token, or may also control a permission of the terminal for adjusting the location of the sending terminal according to other set rules.

When the location of the terminal whose location is to be adjusted is adjusted according to the location information specified by a participating terminal, the location adjusting module 801 specifically adjusts the location of the terminal whose location is to be adjusted at a same side of an original location of the terminal according to the received indication of the location specification information. Taking the schematic diagram of the location as shown in FIG. 4 as an example, adjustment at the same side indicates the following: if the original location of a dual-track sending terminal B that participates in audio mixing is on the left, its location is adjusted to inclination to the left or middle; and if the original location of a single-track sending terminal C that participates in audio mixing is inclination to the right, its location is adjusted to the right.

In this embodiment, when multiple terminals whose locations are to be adjusted exist, the location adjusting module 801 may adjust the location information about audio signals of these terminals whose locations are to be adjusted in turn according to a preset priority. An embodiment of the present invention provides a preferable priority. This priority includes: when single-track, dual-track, and multitrack terminals are involved in audio mixing, the single-track terminal that participates in audio mixing has a primary adjustment priority; the terminal that participates in audio mixing for the first time has a secondary adjustment priority; and when single-track, dual-track, and multitrack terminals are involved in audio mixing, the dual-track terminal and multitrack terminal that participate in audio mixing has tertiary adjustment priority. As an example, a multi-channel terminal A, a dual-track terminal B, and a single-track terminal C that participate in audio mixing all are terminals whose locations are to be adjusted. The dual-track terminal B participates in audio mixing for the first time. In this case, the location of the audio signal of the single-track terminal C is adjusted first. Then the location of the audio signal of the dual-track terminal B is adjusted. Finally the location of the audio signal of the multitrack terminal A is adjusted.

The apparatus of adjusting the location information about the audio signals of the terminals is the multimedia server, or other devices that provide a function of adjusting location information. In the field of video conference, the multimedia server is an MCU (Multipoint Control Unit, multipoint control unit), or may also be a terminal that has an MCU functional module, that is, Mini MCU, which is mainly determined based on the differences among networking architectures of video conference systems.

The foregoing descriptions are merely preferred exemplary embodiments of the present invention, but not intended to limit the present invention. Therefore, the protection scope of the present invention shall be subject to the claims.

## Claims

1. An audio mixing processing method for audio signals, comprising:
determining (S101) a terminal that needs to adjust a location of an audio signal, and adjusting location information about the audio signal for the terminal; wherein when multiple terminals whose locations are to be adjusted exist, the determining a terminal that needs to adjust a location of an audio signal comprises: adjusting the location information about audio signals of the multiple terminals whose locations are to be adjusted in turn according to a preset priority; wherein the preset priority comprises: when single-track, dual-track, and multitrack terminals are involved in audio mixing, the single-track terminal that participates in audio mixing has a primary adjustment priority; the terminal that participates in audio mixing for the first time has a secondary adjustment priority; and the dual-track terminal and multitrack terminal that participate in audio mixing has tertiary adjustment priority; and
performing (S102) audio mixing processing for the audio signal whose location is adjusted and other signals to be audio mixed.

2. The method according to claim 1, wherein the determining a terminal that needs to adjust a location of an audio signal comprises:
when the locations of the audio signals of the terminal and other terminals overlap;
when the location of the audio signal of the terminal does not match the position of the terminal in a video picture of multiple pictures; or
when the terminal participates in audio mixing for the first time;
determining that the terminal is a terminal that needs to adjust the location of the audio signal.

3. The method according to claim 1, wherein the adjusting location information about the audio signal for the terminal comprises:
adjusting the location of the terminal whose location is to be adjusted according to location specification information sent by a participating terminal, wherein the location specification information is the location specified by the participating terminal for the terminal whose location is to be adjusted; and
when multiple participating terminals send location specification information to the terminal for multiple times, adjusting the location of the terminal whose location is to be adjusted according to a time sequence for receiving the different location specification information, or according to a manner for applying for a token.

4. The method according to claim 1 or 3, wherein the adjusting location information about the audio signal for the terminal comprises: adjusting the location of the terminal whose location is to be adjusted at a same side of an original location of the terminal according to the received indication of the location specification information.

5. The method according to claim 1, wherein when the location of the terminal needs to be adjusted as the location of the audio signal of the terminal does not match a position of the terminal in a video picture of multiple pictures, adjusting the location information about the audio signal of the terminal comprises:
adjusting the location of the terminal to its location displayed in the video picture; or
adjusting the location by combining an actual location of the terminal and its location in the video picture.

6. An audio mixing processing apparatus for audio signals, comprising:
a location adjusting module (801), configured to determine a terminal that needs to adjust a location of an audio signal, and adjust location information about the audio signal for the terminal; wherein when multiple terminals whose locations are to be adjusted exist, the location adjusting module (801) is specifically configured to adjust the location information about audio signals of the multiple terminals whose locations are to be adjusted in turn according to a preset priority; wherein the preset priority comprises: when single-track, dual-track, and multitrack terminals are involved in audio mixing, the single-track terminal that participates in audio mixing has a primary adjustment priority; the terminal that participates in audio mixing for the first time has a secondary adjustment priority; and the dual-track terminal and multitrack terminal that participate in audio mixing has tertiary adjustment priority; and
an audio mixing processing module (802), configured to perform audio mixing processing for the audio signal whose location is adjusted and other signals to be audio mixed.

7. The apparatus according to claim 6, wherein the location adjusting module (801) comprises a target terminal determining submodule, configured to: when the locations of the audio signals of the terminal and other terminals overlap; when the location of the audio signal of the terminal does not match the position of the terminal in a video picture of multiple pictures; or, when the terminal participates in audio mixing for the first time, determine a terminal whose location of audio signal needs to be adjusted.

8. The apparatus according to claim 6, wherein the location adjusting module(801) is specifically configured to adjust the location of the terminal whose location is to be adjusted according to location specification information sent by a participating terminal, wherein the location specification information is the location specified by the participating terminal for the terminal whose location is to be adjusted; and
when multiple participating terminals send location specification information to the terminal for multiple times, the location adjusting module (801) adjusts the location of the terminal whose location is to be adjusted according to a time sequence for receiving the different location specification information, or according to a manner for applying for a token.

9. The apparatus according to claim 6 or 8, wherein the location adjusting module (801) is specifically configured to adjust the location of the terminal whose location is to be adjusted at a same side of an original location of the terminal according to the received indication of the location specification information.

10. The apparatus according to claim 6, wherein when the location of the terminal needs to be adjusted as the location of the audio signal of the terminal does not match the position of the terminal in a video picture of multiple pictures, the location adjusting module (801) is specifically configured to adjust the location of the terminal to its location displayed in the video picture; or adjust the location by combining the actual location of the terminal and its location in the video picture.

## Patentansprüche

1. Audiomischungsverarbeitungsverfahren für Audiosignale, das Folgendes umfasst:
Bestimmen (S101) einer Endeinrichtung, die einen Ort eines Audiosignals einstellen muss, und Einstellen von Ortsinformationen über das Audiosignal für die Endeinrichtung; wobei, wenn mehrere Endeinrichtungen, deren Orte eingestellt werden sollen, vorhanden sind, das Bestimmen einer Endeinrichtung, die einen Ort eines Audiosignals einstellen muss, Folgendes umfasst: Einstellen der Ortsinformationen über Audiosignale der mehreren Endeinrichtungen, deren Orte eingestellt werden sollen, nacheinander gemäß einer vorgegebenen Priorität; wobei die vorgegebene Priorität Folgendes umfasst: wenn Einspur-, Doppelspur- und Mehrspurendeinrichtungen in der Audiomischung involviert sind, hat die Einspurendeinrichtung, die an der Audiomischung beteiligt ist, eine primäre Einstellungspriorität; die Endeinrichtung, die an der Audiomischung zum ersten Mal beteiligt ist, hat eine sekundäre Einstellungspriorität; und die Doppelspurendeinrichtung und die Mehrspurendeinrichtung, die an der Audiomischung beteiligt sind, haben eine tertiäre Einstellungspriorität; und
Durchführen (S 102) von Audiomischungsverarbeitung für das Audiosignal, dessen Ort eingestellt wird, und andere Signale, die einer Audiomischung unterzogen werden sollen.

2. Verfahren nach Anspruch 1, wobei das Bestimmen einer Endeinrichtung, die einen Ort eines Audiosignals einstellen muss, Folgendes umfasst:
wenn die Orte der Audiosignale der Endeinrichtung und anderer Endeinrichtungen überlappen;
wenn der Ort des Audiosignals der Endeinrichtung nicht mit der Position der Endeinrichtung in einem Videobild von mehreren Bildern übereinstimmt; oder
wenn die Endeinrichtung an der Audiomischung zum ersten Mal beteiligt ist;
Bestimmen, dass die Endeinrichtung eine Endeinrichtung, die den Ort des Audiosignals einstellen muss, ist.

3. Verfahren nach Anspruch 1, wobei das Einstellen von Ortsinformationen über das Audiosignal für die Endeinrichtung Folgendes umfasst:
Einstellen des Orts der Endeinrichtung, deren Ort eingestellt werden soll, gemäß Ortsspezifikationsinformationen, die von einer beteiligten Endeinrichtung gesendet werden, wobei die Ortsspezifikationsinformationen der Ort sind, der von der beteiligten Endeinrichtung für die Endeinrichtung, deren Ort eingestellt werden soll, spezifiziert wird; und
wenn mehrere beteiligte Endeinrichtungen Ortsspezifikationsinformationen zu mehreren Zeiten an die Endeinrichtung senden, Einstellen des Orts der Endeinrichtung, deren Ort eingestellt werden soll, gemäß einer Zeitfolge zum Empfangen der unterschiedlichen Ortsspezifikationsinformationen oder gemäß einer Art zum Anwenden für ein Token.

4. Verfahren nach Anspruch 1 oder 3, wobei das Einstellen von Ortsinformationen über das Audiosignal für die Endeinrichtung Folgendes umfasst: Einstellen des Orts der Endeinrichtung, deren Ort eingestellt werden soll, an einer selben Seite eines ursprünglichen Orts der Endeinrichtung gemäß der empfangenen Angabe der Ortsspezifikationsinformationen.

5. Verfahren nach Anspruch 1, wobei, wenn der Ort der Endeinrichtung eingestellt werden muss, da der Ort des Audiosignals der Endeinrichtung nicht mit einer Position der Endeinrichtung in einem Videobild von mehreren Bildern übereinstimmt, Einstellen der Ortsinformationen über das Audiosignal der Endeinrichtung Folgendes umfasst:
Einstellen des Orts der Endeinrichtung auf ihren im Videobild angezeigten Ort; oder
Einstellen des Orts durch Kombinieren eines aktuellen Orts der Endeinrichtung und ihres Orts im Videobild.

6. Audiomischungsverarbeitungsgerät für Audiosignale, das Folgendes umfasst:
ein Ortseinstellungsmodul (801), das konfiguriert ist, eine Endeinrichtung, die einen Ort eines Audiosignals einstellen muss, zu bestimmen und Ortsinformationen über das Audiosignal für die Endeinrichtung einzustellen;
wobei, wenn mehrere Endeinrichtungen, deren Orte eingestellt werden sollen, vorhanden sind, das Ortseinstellungsmodul (801) speziell konfiguriert ist, die Ortsinformationen über Audiosignale der mehreren Endeinrichtungen, deren Orte eingestellt werden sollen, nacheinander gemäß einer vorgegebenen Priorität einzustellen; wobei die vorgegebene Priorität Folgendes umfasst: wenn Einspur-, Doppelspur- und Mehrspurendeinrichtungen in der Audiomischung involviert sind, hat die Einspurendeinrichtung, die an der Audiomischung beteiligt ist, eine primäre Einstellungspriorität; die Endeinrichtung, die an der Audiomischung zum ersten Mal beteiligt ist, hat eine sekundäre Einstellungspriorität; und die Doppelspurendeinrichtung und die Mehrspurendeinrichtung, die an der Audiomischung beteiligt sind, haben eine tertiäre Einstellungspriorität; und
ein Audiomischungsverarbeitungsmodul (802), das konfiguriert ist, Audiomischungsverarbeitung für das Audiosignal, dessen Ort eingestellt wird, und andere Signale, die einer Audiomischung unterzogen werden sollen, durchzuführen.

7. Gerät nach Anspruch 6, wobei das Ortseinstellungsmodul (801) ein Zielendeinrichtungsbestimmungsuntermodul umfasst, das konfiguriert ist: wenn die Orte der Audiosignale der Endeinrichtung und anderer Einrichtungen überlappen; wenn der Ort des Audiosignals der Endeinrichtung nicht mit der Position der Endeinrichtung in einem Videobild von mehreren Bildern übereinstimmt; oder wenn die Endeinrichtung an der Audiomischung zum ersten Mal beteiligt ist, eine Endeinrichtung, deren Ort eines Audiosignals eingestellt werden muss, zu bestimmen.

8. Gerät nach Anspruch 6, wobei das Ortseinstellungsmodul (801) speziell konfiguriert ist, den Ort der Endeinrichtung, deren Ort eingestellt werden soll, gemäß Ortsspezifikationsinformationen, die von einer beteiligten Endeinrichtung gesendet werden, einzustellen, wobei die Ortsspezifikationsinformationen der Ort sind, der von der beteiligten Endeinrichtung für die Endeinrichtung, deren Ort eingestellt werden soll, spezifiziert wird; und
wenn mehrere beteiligte Endeinrichtungen Ortsspezifikationsinformationen zu mehreren Zeiten an die Endeinrichtung senden, das Ortseinstellungsmodul (801) den Ort der Endeinrichtung, deren Ort eingestellt werden soll, gemäß einer Zeitfolge zum Empfangen der unterschiedlichen Ortsspezifikationsinformationen oder gemäß einer Art zum Anwenden für ein Token einstellt.

9. Gerät nach Anspruch 6 oder 8, wobei das Ortseinstellungsmodul (801) speziell konfiguriert ist, den Ort der Endeinrichtung, deren Ort eingestellt werden soll, an einer selben Seite eines ursprünglichen Orts der Endeinrichtung gemäß der empfangenen Angabe der Ortsspezifikationsinformationen einzustellen.

10. Gerät nach Anspruch 6, wobei, wenn der Ort der Endeinrichtung eingestellt werden muss, da der Ort des Audiosignals der Endeinrichtung nicht mit der Position der Endeinrichtung in einem Videobild von mehreren Bildern übereinstimmt, das Ortseinstellungsmodul (801) speziell konfiguriert ist, den Ort der Endeinrichtung auf ihren im Videobild angezeigten Ort einzustellen; oder den Ort durch Kombinieren des aktuellen Orts der Endeinrichtung und ihres Orts im Videobild einzustellen.

## Revendications

1. Procédé de traitement de mélange audio pour des signaux audio, le procédé comprenant les étapes consistant à :
déterminer (S101) un terminal qui a besoin d'ajuster un emplacement d'un signal audio, et ajuster des informations d'emplacement relatives au signal audio pour le terminal ; en présence d'une pluralité de terminaux dont les emplacements doivent être ajustés, laquelle étape consistant à déterminer un terminal qui a besoin d'ajuster un emplacement d'un signal audio comprend l'étape consistant à : ajuster successivement, selon une priorité préétablie, les informations d'emplacement relatives à des signaux audio de la pluralité de terminaux dont les emplacements doivent être ajustés ; laquelle priorité préétablie s'établit comme suit : si des terminaux monopiste, double piste et multipiste entrent en jeu dans le mélange audio,
le terminal monopiste qui participe au mélange audio est affecté d'une priorité d'ajustement primaire ; le terminal qui participe au mélange audio pour la première fois est affecté d'une priorité d'ajustement secondaire ; et le terminal double piste et le terminal multipiste qui participent au mélange audio sont affectés d'une priorité d'ajustement tertiaire ; et
réaliser (S 102) un traitement de mélange audio pour le signal audio dont l'emplacement est ajusté et d'autres signaux à soumettre au mélange audio.

2. Procédé selon la revendication 1, dans lequel l'étape consistant à déterminer un terminal qui a besoin d'ajuster un emplacement d'un signal audio comprend l'étape consistant à :
si les emplacements des signaux audio du terminal et d'autres terminaux se chevauchent ;
si l'emplacement du signal audio du terminal ne coïncide pas avec la position du terminal dans une image vidéo d'une pluralité d'images ; ou
si le terminal participe au mélange audio pour la première fois ;
déterminer que le terminal est un terminal qui a besoin d'ajuster l'emplacement du signal audio.

3. Procédé selon la revendication 1, dans lequel l'étape consistant à ajuster des informations d'emplacement relatives au signal audio pour le terminal comprend les étapes consistant à :
ajuster l'emplacement du terminal dont l'emplacement doit être ajusté selon des informations de spécification d'emplacement envoyées par un terminal participant, lesquelles informations de spécification d'emplacement représentent l'emplacement spécifié par le terminal participant pour le terminal dont l'emplacement doit être ajusté ; et
si une pluralité de terminaux participants envoient des informations de spécification d'emplacement au terminal une pluralité de fois, ajuster l'emplacement du terminal dont l'emplacement doit être ajusté selon un ordre chronologique de réception des différentes informations de spécification d'emplacement, ou selon un mode de demande d'un jeton.

4. Procédé selon la revendication 1 ou 3, dans lequel l'étape consistant à ajuster des informations d'emplacement relatives au signal audio pour le terminal comprend l'étape consistant à : ajuster l'emplacement du terminal dont l'emplacement doit être ajusté d'un même côté d'un emplacement d'origine du terminal selon l'indication reçue des informations de spécification d'emplacement.

5. Procédé selon la revendication 1, dans lequel, si l'emplacement du terminal a besoin d'être ajusté du fait que l'emplacement du signal audio du terminal ne coïncide pas avec une position du terminal dans une image vidéo d'une pluralité d'images, l'étape consistant à ajuster les informations d'emplacement relatives au signal audio du terminal comprend l'étape consistant à :
ajuster l'emplacement du terminal sur son emplacement affiché dans l'image vidéo ; ou
ajuster l'emplacement en combinant un emplacement effectif du terminal et son emplacement dans l'image vidéo.

6. Appareil de traitement de mélange audio pour des signaux audio, l'appareil comprenant :
un module d'ajustement d'emplacement (801), configuré pour déterminer un terminal qui a besoin d'ajuster un emplacement d'un signal audio, et ajuster des informations d'emplacement relatives au signal audio pour le terminal ; en présence d'une pluralité de terminaux dont les emplacements doivent être ajustés, lequel module d'ajustement d'emplacement (801) est plus particulièrement configuré pour ajuster successivement, selon une priorité préétablie, les informations d'emplacement relatives à des signaux audio de la pluralité de terminaux dont les emplacements doivent être ajustés ; laquelle priorité préétablie s'établit comme suit : si des terminaux monopiste, double piste et multipiste entrent en jeu dans le mélange audio, le terminal monopiste qui participe au mélange audio est affecté d'une priorité d'ajustement primaire ; le terminal qui participe au mélange audio pour la première fois est affecté d'une priorité d'ajustement secondaire ; et le terminal double piste et le terminal multipiste qui participent au mélange audio sont affectés d'une priorité d'ajustement tertiaire ; et
un module de traitement de mélange audio (802), configuré pour réaliser un traitement de mélange audio pour le signal audio dont l'emplacement est ajusté et d'autres signaux à soumettre au mélange audio.

7. Appareil selon la revendication 6, dans lequel le module d'ajustement d'emplacement (801) comprend un sous-module de détermination de terminal cible, configuré pour : si les emplacements des signaux audio du terminal et d'autres terminaux se chevauchent ; si l'emplacement du signal audio du terminal ne coïncide pas avec la position du terminal dans une image vidéo d'une pluralité d'images ; ou si le terminal participe au mélange audio pour la première fois, déterminer un terminal dont l'emplacement du signal audio a besoin d'être ajusté.

8. Appareil selon la revendication 6, dans lequel le module d'ajustement d'emplacement (801) est tout particulièrement configuré pour ajuster l'emplacement du terminal dont l'emplacement doit être ajusté selon des informations de spécification d'emplacement envoyées par un terminal participant, lesquelles informations de spécification d'emplacement représentent l'emplacement spécifié par le terminal participant pour le terminal dont l'emplacement doit être ajusté ; et
si une pluralité de terminaux participants envoient des informations de spécification d'emplacement au terminal une pluralité de fois, le module d'ajustement d'emplacement (801) ajuste l'emplacement du terminal dont l'emplacement doit être ajusté selon un ordre chronologique de réception des différentes informations de spécification d'emplacement, ou selon un mode de demande d'un jeton.

9. Appareil selon la revendication 6 ou 8, dans lequel le module d'ajustement d'emplacement (801) est tout particulièrement configuré pour ajuster l'emplacement du terminal dont l'emplacement doit être ajusté d'un même côté d'un emplacement d'origine du terminal selon l'indication reçue des informations de spécification d'emplacement.

10. Appareil selon la revendication 6, dans lequel, si l'emplacement du terminal a besoin d'être ajusté du fait que l'emplacement du signal audio du terminal ne coïncide pas avec la position du terminal dans une image vidéo d'une pluralité d'images, le module d'ajustement d'emplacement (801) est tout particulièrement configuré pour ajuster l'emplacement du terminal sur son emplacement affiché dans l'image vidéo ; ou ajuster l'emplacement en combinant l'emplacement effectif du terminal et son emplacement dans l'image vidéo.
